# FASCICULE DE BREVET EUROPEEN

(11) **EP 2 596 268 B1**
(45) Date de publication et mention de la délivrance du brevet: **20.07.2016**
(21) Numéro de dépôt: 11727216.1
(22) Date de dépôt: 17.05.2011
(51) Int. Cl.: F16J 3/04, F16D 3/84, B62D 3/12

(54) **SOUFFLET DE DIRECTION SE PRESENTANT SOUS FORME D'UN MANCHON**
LENKMANSCHETTE IN FORM EINER HÜLSE
STEERING BOOT PROVIDED IN THE FORM OF A SLEEVE

(30) Priorité: 20.07.2010 FR 1055906
(43) Date de publication de la demande: 29.05.2013
(73) Titulaire: Trelleborg Boots France, 44470 Carquefou (FR)
(72) Inventeur: LE QUELLEC, Loïc, 44850 Mouzeil (FR); MAITAY, Frédéric, 44440 Riaille (FR)
(74) Mandataire: Godineau, Valérie
(86) Numéro de dépôt international: PCT/FR2011/051098
(87) Numéro de publication internationale: WO 2012/010757

(56) Documents cités:
- EP-A2- 0 327 347
- DE-U- 7 030 176
- FR-A- 1 482 069
- JP-A- 2006 266 418
- US-A1- 2007 210 535
- US-B1- 6 932 346

## Description

La présente invention concerne un soufflet de direction ainsi qu'une direction à crémaillère intégrant un tel soufflet.

Elle concerne plus particulièrement un soufflet de direction se présentant sous forme d'un manchon comportant successivement dans le sens axial au moins une première extrémité annulaire, dite grande base, apte à former une extrémité de fixation du soufflet à un premier élément de direction, tel qu'un boitier ou carter de direction à protéger, une partie déformable dans le sens d'un allongement ou d'un raccourcissement dudit soufflet formée d'une succession de spires coaxiales, une deuxième extrémité annulaire, dite petite base, apte à former l'extrémité de fixation du soufflet à un deuxième élément de direction, tel qu'une biellette de direction à protéger.

Dans une direction à crémaillère de véhicule automobile, un pignon de direction est lié en rotation avec la colonne de direction, manoeuvrée à l'aide du volant de conduite du véhicule, ce pignon venant en prise avec une crémaillère montée coulissante, suivant sa direction longitudinale, dans un carter de direction. Les deux extrémités opposées de la crémaillère, extérieures au carter, sont accouplées à des biellettes de direction associées respectivement aux roues directrices droite et gauche du véhicule, les biellettes assurant la liaison entre la crémaillère et chacun des porte-fusée. Ainsi, la rotation du volant dans un sens ou dans l'autre, donc la rotation correspondante du pignon de direction, est convertie en une translation correspondante de la crémaillère qui, par l'intermédiaire des biellettes et des porte-fusée, provoque elle-même l'orientation des roues du véhicule, pour un braquage à droite ou à gauche.

Dans une telle direction à crémaillère, la liaison articulée entre chaque extrémité de la crémaillère et la biellette correspondante est une liaison à rotule, dite rotule "axiale", réalisée par un boîtier de rotule axiale solidaire de l'extrémité de la crémaillère, et par un pivot de rotule axiale à tête sphérique, solidaire de la biellette et monté tournant en tous sens dans le boîtier de rotule axiale.

Compte tenu de la mobilité de la crémaillère relativement au carter de direction, et de l'orientation variable de la biellette relativement à l'extrémité de la crémaillère, la protection de la direction dans la région de chaque rotule axiale est habituellement assurée par un soufflet, qui relie l'extrémité adjacente du carter de direction à la biellette correspondante, en entourant l'extrémité de la crémaillère (extérieure au carter) et la rotule axiale. Une extrémité annulaire du soufflet est fixée autour de l'extrémité du carter de direction au moyen d'un premier collier d'attache, serré autour de cette extrémité. L'autre extrémité annulaire du soufflet est fixée autour de la biellette, ou du pivot de rotule axiale, au moyen d'un second collier d'attache, serré autour de cette autre extrémité. Ainsi fixé, le soufflet assure l'étanchéité dans l'intervalle entre le carter de direction et la biellette.

Entre ses deux extrémités ainsi attachées, le soufflet possède un certain nombre de spires, qui permettent l'allongement ou le raccourcissement de ce soufflet selon la position de la crémaillère relativement au carter de direction, et qui autorisent aussi une flexion du même soufflet, en fonction de l'orientation variable prise par la biellette grâce à l'articulation à rotule.

Une direction à crémaillère de véhicule automobile est habituellement réalisée de façon totalement étanche, afin d'éviter toute entrée indésirable d'eau ou d'humidité à l'intérieur de la direction. Ceci pose, toutefois, des problèmes de surpression ou de dépression dans la direction, en fonction de l'augmentation ou de la baisse de la température environnante, et/ou de la température de l'air contenu dans la direction.

En effet, lors des phases d'augmentation de température, la matière se ramollit, la pression augmente et le soufflet se déforme. Ce phénomène, appelé "snaking" (forme de S) entraîne un frottement du soufflet sur les parties métalliques pouvant provoquer sa rupture. Pour éviter de telles déformations, et leurs conséquences néfastes, il a déjà été proposé de permettre une entrée de l'air dans la direction, ou inversement, une sortie de l'air de manière à rendre la direction "respirante" en évitant autant que possible une entrée indésirable d'eau ou d'autre liquide ou encore de poussière.

Une solution connue consiste à réaliser des directions avec soufflets "respirants" qui permettent l'entrée ou la sortie d'air. Toutefois, cette solution nécessite une fabrication spéciale, donc complexe et coûteuse des soufflets eux-mêmes.

D'autre part, il existe par exemple le DE 7030176U, des soufflets comprenant plusieurs zones distinctes de spires, où l'effet de la pression dans le soufflet est compensé par une déformation controlée des différentes zones de spires.

Un but de la présente invention est de proposer un soufflet dont la conception, bien que simple, permet de limiter la déformation et la détérioration du soufflet.

A cet effet, l'invention a pour objet un soufflet de direction se présentant sous forme d'un manchon comportant successivement dans le sens axial au moins une première extrémité annulaire, dite grande base, apte à former une extrémité de fixation du soufflet à un premier élément de direction, tel qu'un boitier ou carter de direction à protéger, une partie déformable dans le sens d'un allongement ou d'un raccourcissement dudit soufflet formée d'une succession de spires coaxiales, une deuxième extrémité annulaire, dite petite base, apte à former l'extrémité de fixation du soufflet à un deuxième élément de direction, tel qu'une biellette de direction à protéger,
caractérisé en ce que la partie déformable du soufflet comporte, dans le sens axial, au moins trois zones distinctes de spires, l'une des zones, dite zone de transition étant interposée entre au moins deux zones dites, l'une, zone de petites spires, l'autre, zone de grandes spires, zones de petites et de grandes spires étant formées chacune de spires de diamètre constant d'une spire à une autre, le diamètre des spires de la zone de petites spires étant inférieur au diamètre des spires de la zone de grandes spires, lesdites zones étant configurées de telle sorte que, sous l'effet d'une compression axiale du soufflet, les spires de la zone de transition sont déformables avant les spires de la zone de petites spires et les spires de la zone de petites spires se compriment avant les spires de la zone de grandes spires.

Grâce à la configuration en trois zones de la partie déformable, on limite la forme conique du soufflet qui favorise la déformation en S. En outre, du fait de l'ordre choisi pour la déformation des zones, on favorise l'augmentation du volume en faisant s'écraser les petites spires et en étirant les grandes lors de la montée en pression à l'intérieur du soufflet, ladite montée en pression étant liée à la température.

Cette géométrie permet un bon empilement transversal des spires limitant la mise en S du soufflet. De plus, les petites spires se comprimant et les grandes s'étirant, le volume global du soufflet augmente faisant chuter la pression.

De préférence, au moins pour chacune des zones de petites et de grandes spires, l'épaisseur et/ou l'angle au sommet de chaque spire et/ou l'angle de la jonction en creux entre les spires sont choisis de telle que, sous l'effet d'une compression axiale du soufflet, les spires de la zone de petites spires se compriment avant les spires de la zone de grandes spires.

La déformation par compression d'une zone par rapport aux autres zones peut être facilitée en réduisant l'épaisseur des spires de ladite zone et/ou en réduisant la valeur de l'angle au sommet ou au niveau du creux des spires pour faciliter la cassure de la spire.

Le choix de ces paramètres particulièrement aisés à gérer lors de la fabrication du soufflet, en particulier dans le cas de soufflet fabriqué par extrusion soufflage, permet d'atteindre les résultats attendus sans surcoût.

De préférence, au moins l'une des spires de la zone de transition présente un diamètre supérieur au diamètre des spires de la zone de petites spires et inférieur au diamètre des spires de la zone de grandes spires.

L'épaisseur et/ou l'angle au sommet de chaque spire et/ou l'angle de la jonction en creux des spires de la zone de transition sont choisis de telle sorte que les spires de la zone de transition se compriment avant les spires de la zone de petites spires.

Les spires de la zone de transition présentent un angle au sommet et/ou un angle de la jonction en creux inférieur respectivement à ceux des spires de la zone de grandes spires.

En d'autres termes, l'angle au sommet des spires de la zone de transition est inférieur à l'angle au sommet des spires de la zone de grandes spires et/ou l'angle de la jonction en creux des spires de la zone de transition est inférieur à l'angle de la jonction en creux des spires de la zone de grandes spires.

De préférence, la zone de transition comporte au plus trois spires.

Généralement, les spires de la zone de transition sont d'épaisseur inférieure à l'épaisseur des spires de la zone de grandes spires.

Les spires de la zone de petites spires sont d'épaisseur inférieure à l'épaisseur des spires de la zone de grandes spires.

L'invention a encore pour objet une direction à crémaillère pour véhicule automobile du type comprenant un soufflet de direction, un carter de direction et une biellette de direction, ledit soufflet étant agencé pour relier l'extrémité du carter de direction à la biellette de direction en entourant une rotule axiale liant l'extrémité correspondante de la crémaillère à la biellette de direction, caractérisée en ce que le soufflet de direction du type précité et en ce que les petite et grande bases du soufflet sont respectivement agencées pour être montées l'une, autour de la biellette, l'autre, pour un maintien sur le carter de direction, la zone de petites spires jouxtant la petite base du soufflet et la zone de grandes spires jouxtant la grande base du soufflet.

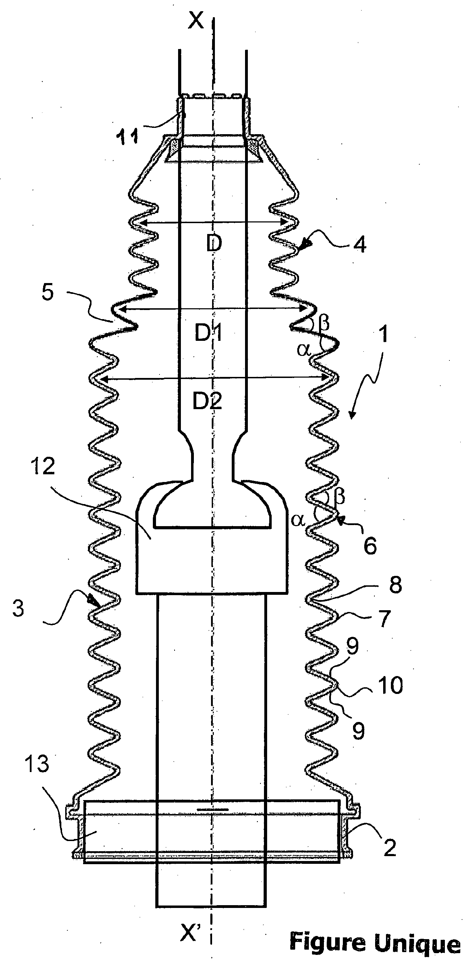

L'invention sera bien comprise à la lecture de la description suivante d'exemples de réalisation, en référence à la figure unique qui représente une vue schématique en coupe d'un soufflet conforme à l'invention, à l'état raccordé de deux éléments de direction à protéger.

Comme mentionné ci-dessus, l'invention a pour objet un soufflet 1 de direction en matière élastiquement déformable, en particulier en caoutchouc ou en élastomère, ledit soufflet étant de préférence fabriqué par hydroformage, extrusion soufflage, injection soufflage ou formage mécanique.

Ce soufflet, représenté en 1 à la figure, se présente sous forme d'un manchon d'axe XX' ouvert à chacune de ses extrémités. Ce manchon comporte successivement, dans le sens axial, une première extrémité annulaire, dite grande base 2, fixée généralement autour de l'extrémité du carter de direction au moyen d'un premier collier d'attache serré autour de cette extrémité.

Ce manchon comporte encore une partie 3 déformable dans le sens d'un allongement ou d'un raccourcissement dudit soufflet formée d'une succession de spires 7 coaxiales.

Cette partie 3 déformable du manchon est formée par une paroi tubulaire plissée, par exemple à la manière d'un plissage en accordéon, ou ondulée du manchon pour former des spires ou ondes s'étendant parallèlement les unes aux autres dans une direction générale sensiblement perpendiculaire à l'axe longitudinal XX' du manchon correspondant à l'axe longitudinal du soufflet. Les spires sont coaxiales à l'axe longitudinal du soufflet.

Généralement, chaque spire ou onde comporte deux flancs 9 reliés entre eux au sommet 10 de ladite spire. Chaque spire est séparée d'une spire adjacente par une jonction 8 en creux.

Les flancs de chaque spire présentent donc des premières extrémités raccordées par une partie, telle qu'un pli ou une portion en arc de cercle, appelée sommet 10 de la spire et des secondes extrémités qui sont raccordées par une partie, telle qu'un pli ou une portion en arc de cercle, à des extrémités correspondantes des flancs de spires ou d'ondes voisines.

Généralement, les flancs sont symétriques par rapport à un plan sensiblement perpendiculaire à l'axe du manchon ou soufflet. Ces flancs sont ici représentés droits.

Le manchon comporte encore une deuxième extrémité annulaire, dite petite base 11, apte à former l'extrémité de fixation du soufflet autour de la biellette ou du pivot de rotule axiale au moyen d'un second collier d'attache serré autour de cette extrémité. Ainsi fixé, le soufflet assure l'étanchéité de la direction dans l'intervalle entre les deux extrémités.

De manière caractéristique à l'invention, la partie 3 déformable du soufflet comporte, dans le sens axial, au moins trois zones distinctes de spires appelées respectivement zone 4 de petites spires, zone 5 de transition et zone 6 de grandes spires.

La zone 5 de transition est disposée entre la zone 4 de petites spires et la zone 6 de grandes spires. Cette zone 5 de transition comporte au plus trois spires.

Ainsi, dans l'exemple représenté, le soufflet 1 est un soufflet de direction à crémaillère pour véhicule automobile, ledit soufflet 1 étant agencé pour relier une extrémité d'un carter de direction à une biellette 12 de direction en entourant une rotule axiale liant l'extrémité correspondante de la crémaillère à la biellette de direction, les petite et grande bases 11, 2 du soufflet 1 étant respectivement agencées pour être montées l'une 11, autour de la biellette 12, l'autre 2, pour un maintien sur le carter 13 de direction, la zone 4 de petites spires jouxtant la petite base 11 du soufflet et la zone 6 de grandes spires jouxtant la grande base 2 du soufflet.

Bien évidemment, l'application à d'autres types de soufflet peut également être envisagée.

De préférence, au moins l'une des spires de la zone 5 de transition présente un diamètre D1 supérieur au diamètre D des spires de la zone 4 de petites spires et inférieur au diamètre D2 des spires de la zone 6 de grandes spires. A chaque fois le diamètre a été pris au sommet de ladite spire.

Le diamètre des spires de la zone de petites spires est inférieur au diamètre des spires de la zone de grandes spires. Les zones de petites spires et de grandes spires sont formées chacune de spires de diamètre constant d'une spire à une autre pour conférer à ladite zone une forme générale de manchon cylindrique à section circulaire limitant la prise de forme en S dudit manchon.

La petite base du manchon jouxte la zone de petites spires tandis que la grande base du manchon jouxte la zone de grandes spires. Ces zones de spires sont, en outre, configurées de telle sorte que, sous l'effet d'une compression axiale du soufflet, les spires de la zone 4 de petites spires se compriment avant les spires de la zone 6 de grandes spires.

De plus, les spires de la zone de transition sont, sous l'effet d'une compression axiale du soufflet, déformables avant les spires de la zone 4 de petites spires, de sorte que les zones de spires se déforment suivant un ordre prédéterminé correspondant à une déformation, dans un premier temps, des spires de la zone de transition puis, dans un second temps, des spires de la zone 4 de petites spires puis, dans un troisième temps, des spires de la zone 6 de grandes spires.

Pour faciliter cette déformation, les zones de spires présentent des épaisseurs de spires et/ou des angles α au sommet et/ou des angles β de jonction en creux des spires distincts d'une zone à une autre.

Ainsi, dans l'exemple représenté, les spires 7 de la zone 5 de transition sont d'épaisseur inférieure à l'épaisseur des spires de la zone 4 de petites spires et les spires 7 de la zone 4 de petites spires sont d'épaisseur inférieure à l'épaisseur des spires de la zone 6 de grandes spires.

Les spires de la zone 5 de transition présentent, de préférence, une épaisseur voisine de 0,5 mm, les spires de la zone 4 de petites spires, une épaisseur de l'ordre de 0,8 mm, et les spires de la zone 6 de grandes spires, une épaisseur de l'ordre de 1,2 mm.

Les spires de la zone 5 de transition auraient pu être choisies de telle sorte qu'elles présentent un angle α au sommet ou un angle β de jonction 8 en creux inférieurs respectivement à ceux des spires de la zone 6 de grandes spires.

Dans les exemples représentés, les angles α au sommet et β de la jonction 8 en creux des spires sont identiques d'une zone de spires à une autre.

Grâce à la configuration du soufflet, telle que représentée à la figure unique, on constate donc, sous l'effet d'une compression axiale du soufflet, une déformation par compression, dans un premier temps, des spires de la zone 5 de transition puis, dans un second temps, des spires de la zone 4 de petites spires puis, dans un troisième temps, des spires de la zone 6 de grandes spires. Cet ordre de déformation permet de limiter, voir d'éviter, la prise d'une forme en S du soufflet.

## Revendications

1. Soufflet (1) de direction se présentant sous forme d'un manchon comportant successivement dans le sens axial au moins une première extrémité annulaire, dite grande base (2), apte à former une extrémité de fixation du soufflet à un premier élément de direction, tel qu'un boitier ou carter de direction à protéger, une partie (3) déformable dans le sens d'un allongement ou d'un raccourcissement dudit soufflet (1) formée d'une succession de spires (7) coaxiales, une deuxième extrémité annulaire, dite petite base (11), apte à former l'extrémité de fixation du soufflet (1) à un deuxième élément de direction, tel qu'une biellette de direction à protéger,
**caractérisé en ce que** la partie (3) déformable du soufflet (1) comporte, dans le sens axial, au moins trois zones (4, 5, 6) distinctes de spires, l'une (5) des zones, dite zone (5) de transition étant interposée entre au moins deux zones (4, 6) dites, l'une, zone (4) de petites spires, l'autre, zone (6) de grandes spires, zones (4, 6) de petites et de grandes spires étant formées chacune de spires (7) de diamètre constant d'une spire à une autre, le diamètre (D) des spires (7) de la zone (4) de petites spires étant inférieur au diamètre (D2) des spires (7) de la zone (6) de grandes spires, lesdites zones (4, 5, 6) étant configurées de telle sorte que, sous l'effet d'une compression axiale du soufflet, les spires de la zone (5) de transition sont déformables avant les spires de la zone (4) de petites spires et les spires de la zone (4) de petites spires se compriment avant les spires de la zone (6) de grandes spires.

2. Soufflet (1) de direction selon la revendication 1, du type dans lequel chaque spire (7) de la partie (3) déformable du manchon comprend deux flancs (9) reliés entre eux au sommet (10) de ladite spire et est séparée d'une spire (7) adjacente par une jonction (8) en creux,
**caractérisé en ce qu'**au moins pour chacune des zones (4, 6) de petites et de grandes spires, l'épaisseur et/ou l'angle (α) au sommet de chaque spire et/ou l'angle (β) de la jonction (8) en creux entre les spires sont choisis de telle que, sous l'effet d'une compression axiale du soufflet, les spires de la zone (4) de petites spires se compriment avant les spires de la zone (6) de grandes spires.

3. Soufflet (1) de direction selon l'une des revendications 1 et 2,
**caractérisé en ce qu'**au moins l'une des spires de la zone (5) de transition présente un diamètre (D1) supérieur au diamètre (D) des spires de la zone (4) de petites spires et inférieur au diamètre (D2) des spires de la zone (6) de grandes spires.

4. Soufflet (1) de direction selon l'une des revendications précédentes, du type dans lequel chaque spire (7) comprend deux flancs (9) reliés entre eux au sommet (10) de ladite spire et est séparée d'une spire (7) adjacente par une jonction (8) en creux,
**caractérisé en ce que** l'épaisseur et/ou l'angle (α) au sommet de chaque spire et/ou l'angle (β) de la jonction en creux des spires de la zone (5) de transition sont choisis de telle sorte que les spires de la zone (5) de transition se compriment avant les spires de la zone (4) de petites spires.

5. Soufflet (1) de direction selon la revendication 4,
**caractérisé en ce que** les spires de la zone (5) de transition présentent un angle (α) au sommet et/ou un angle (β) de la jonction (8) en creux inférieur(s) respectivement à ceux des spires de la zone (6) de grandes spires.

6. Soufflet (1) de direction selon l'une des revendications 1 à 5,
**caractérisé en ce que** la zone (5) de transition comporte au plus trois spires.

7. Soufflet (1) de direction selon l'une des revendications 1 à 6,
**caractérisé en ce que** les spires (7) de la zone (5) de transition sont d'épaisseur inférieure à l'épaisseur des spires de la zone (6) de grandes spires.

8. Soufflet (1) de direction selon l'une des revendications 1 à 7,
**caractérisé en ce que** les spires (7) de la zone (4) de petites spires sont d'épaisseur inférieure à l'épaisseur des spires de la zone (6) de grandes spires.

9. Direction à crémaillère pour véhicule automobile du type comprenant un soufflet (1) de direction, un carter de direction et une biellette de direction, ledit soufflet (1) étant agencé pour relier l'extrémité du carter de direction à la biellette de direction en entourant une rotule axiale liant l'extrémité correspondante de la crémaillère à la biellette de direction,
**caractérisée en ce que** le soufflet (1) de direction est conforme à l'une des revendication 1 à 8 et **en ce que** les petite et grande bases (11, 2) du soufflet (1) sont respectivement agencées pour être montées l'une (11), autour de la biellette, l'autre (2), pour un maintien sur le carter de direction, la zone (4) de petites spires jouxtant la petite base (11) du soufflet et la zone (6) de grandes spires jouxtant la grande base (2) du soufflet.

## Patentansprüche

1. Lenkmanschette (1) in Form einer Hülse, die aufeinanderfolgend in axialer Richtung mindestens ein erstes ringförmiges Ende, als große Basis (2) bezeichnet, das imstande ist, ein Befestigungsende der Manschette an einem ersten Lenkungselement wie ein zu schützender Lenkkasten oder Lenkungsgehäuse zu bilden, einen in Richtung einer Verlängerung oder einer Verkürzung der Manschette (1) verformbaren Teil (3), der von einer Abfolge koaxialer Windungen (7) gebildet ist, und ein zweites ringförmiges Ende, als kleine Basis (11) bezeichnet, das imstande ist, das Befestigungsende der Manschette (1) an einem zweiten Lenkungselement wie eine zu schützende Spurstange zu bilden, aufweist,
**dadurch gekennzeichnet, dass** der verformbare Teil (3) der Manschette (1) in axialer Richtung mindestens drei unterschiedliche Windungszonen (4, 5, 6) aufweist, wobei sich eine (5) der Zonen, als Übergangszone (5) bezeichnet, zwischen mindestens zwei Zonen (4, 6) befindet, von denen die eine als Zone mit kleinen Windungen (4), die andere als Zone mit großen Windungen (6) bezeichnet wird, wobei die Zonen (4, 6) mit kleinen und mit großen Windungen jeweils von Windungen (7) mit konstantem Durchmesser von einer Windung zu einer anderen gebildet ist, wobei der Durchmesser (D) der Windungen (7) der Zone (4) mit kleinen Windungen kleiner als der Durchmesser (D2) der Windungen (7) der Zone (6) mit großen Windungen ist, wobei die Zonen (4, 5, 6) derart konfiguriert sind, dass unter der Wirkung einer axialen Kompression der Manschette die Windungen der Übergangszone (5) vor den Windungen der Zone (4) mit kleinen Windungen verformbar sind und sich die Windungen der Zone (4) mit kleinen Windungen vor den Windungen der Zone (6) mit großen Windungen komprimieren.

2. Lenkmanschette (1) nach Anspruch 1 des Typs, bei dem jede Windung (7) des verformbaren Teils (3) der Hülse zwei Flanken (9) umfasst, die miteinander an der Spitze (10) der Windung verbunden sind und von einer benachbarten Windung (7) durch eine Hohlfuge (8) getrennt ist,
**dadurch gekennzeichnet, dass** mindestens für jede der Zonen (4, 6) mit kleinen und mit großen Windungen die Dicke und/oder der Winkel (α) an der Spitze jeder Windung und/oder der Winkel (β) der Hohlfuge (8) zwischen den Windungen derart ausgewählt sind, dass unter der Wirkung einer axialen Kompression der Manschette die Windungen der Zone (4) mit kleinen Windungen vor den Windungen der Zone (6) mit großen Windungen komprimiert werden.

3. Lenkmanschette (1) nach einem der Ansprüche 1 und 2,
**dadurch gekennzeichnet, dass** mindestens eine der Windungen der Übergangszone (5) einen Durchmesser (D1) aufweist, der größer als der Durchmesser (D) der Windungen der Zone (4) mit kleinen Windungen und kleiner als der Durchmesser (D2) der Windungen der Zone (6) mit großen Windungen ist.

4. Lenkmanschette (1) nach einem der vorangehenden Ansprüche des Typs, bei dem jede Windung (7) zwei Flanken (9) umfasst, die miteinander an der Spitze (10) der Windung verbunden sind und von einer benachbarten Windung (7) durch eine Hohlfuge (8) getrennt ist,
**dadurch gekennzeichnet, dass** die Dicke und/oder der Winkel (α) an der Spitze jeder Windung und/oder der Winkel (β) der Hohlfuge der Windungen der Übergangszone (5) derart ausgewählt sind, dass die Windungen der Übergangszone (5) vor den Windungen der Zone (4) mit kleinen Windungen komprimiert werden.

5. Lenkmanschette (1) nach Anspruch 4,
**dadurch gekennzeichnet, dass** die Windungen der Übergangszone (5) einen Winkel (α) an der Spitze und/oder einen Winkel (β) der Hohlfuge (8) aufweisen, der/die jeweils kleiner als der/die der Windungen der Zone (6) mit großen Windungen ist/sind.

6. Lenkmanschette (1) nach einem der Ansprüche 1 bis 5,
**dadurch gekennzeichnet, dass** die Übergangszone (5) höchsten drei Windungen aufweist.

7. Lenkmanschette (1) nach einem der Ansprüche 1 bis 6,
**dadurch gekennzeichnet, dass** die Windungen (7) der Übergangszone (5) von geringerer Dicke als die Dicke der Windungen der Zone (6) mit großen Windungen sind.

8. Lenkmanschette (1) nach einem der Ansprüche 1 bis 7,
**dadurch gekennzeichnet, dass** die Windungen (7) der Zone (4) mit kleinen Windungen von geringerer Dicke als die Dicke der Windungen der Zone (6) mit großen Windungen sind.

9. Zahnstangenlenkung für Kraftfahrzeug des Typs, der eine Lenkmanschette (1), ein Lenkungsgehäuse und eine Spurstange umfasst, wobei die Manschette (1) ausgebildet ist, um das Ende des Lenkungsgehäuses mit der Spurstange durch Umschließen eines axialen Kugelgelenks zu verbinden, das das entsprechende Ende der Zahnstange mit der Spurstange verbindet,
**dadurch gekennzeichnet, dass** die Lenkmanschette (1) nach einem der Ansprüche 1 bis 8 ist und dass die kleine und große Basis (11, 2) der Manschette (1) jeweils ausgebildet sind, um, die eine (11), um die Stange montiert zu sein, die andere (2), für einen Halt auf dem Lenkungsgehäuse, wobei sich die Zone (4) mit kleinen Windungen an die kleine Basis (11) der Manschette anschließt und sich die Zone (6) mit großen Windungen an die große Basis (2) der Manschette anschließt.

## Claims

1. A steering boot (1) assuming the form of a sleeve successively including, in the axial direction, at least one first annular end, called large base (2), able to form a fastening end of the boot to a first steering element, such as a steering gearbox or case to be protected, a part (3) deformable in the direction of elongation or shortening of said boot (1) formed by a series of coaxial turns (7), a second annular end, called small base (11), able to form the fastening end of the boot (1) to a second steering element, such as a steering connecting rod to be protected,
**characterized in that** the deformable part (3) of the boot (1) includes, in the axial direction, at least three separate zones (4, 5, 6) of turns, one (5) of the zones, called transition zone (5), being inserted between at least two said zones (4, 6), one, the small turn zone (4), the other, the large turn zone (6), small and large turn zones (4, 6) each being formed by turns (7) with a constant diameter from one turn to the next, the diameter (D) of the turns (7) of the small turn zone (4) being smaller than the diameter (D2) of the turns (7) of the large turn zone (6), said zones (4, 5, 6) being configured such that, under the effect of an axial compression of the boot, the turns of the transition zone (5) are deformable before the turns of the small turn zone (4) and the turns of the small turn zone (4) compress before the turns of the large turn zone (6).

2. The steering boot (1) according to claim 1, of the type in which each turn (7) of the deformable part (3) of the sleeve comprises two flanks (9) connected to one another at the apex (10) of said turn and is separated from an adjacent turn (7) by a hollow junction (8),
**characterized in that** at least for each of the small and large turn zones (4, 6), the thickness and/or the angle (α) at the apex of each turn and/or the angle (β) of the hollow junction (8) between the turns are chosen such that, under the effect of an axial compression of the boot, the turns of the small turn zone (4) compressed before the turns of the large turn zone (6).

3. The steering boot (1) according to one of claims 1 and 2,
**characterized in that** at least one of the turns of the transition zone (5) has a diameter (D1) larger than the diameter (D) of the turns of the small turn zone (4) and smaller than the diameter (D2) of the turns of the large turn zone (6).

4. The steering boot (1) according to one of the preceding claims, of the type in which each turn (7) comprises two flanks (9) connected to one another at the apex (10) of said turn and is separated from an adjacent turn (7) by a hollow junction (8),
**characterized in that** the thickness and/or the angle (α) at the apex of each turn and/or the angle (β) of the hollow junction of the turns of the transition zone (5) are chosen such that the turns of the transition zone (5) compress before the turns of the small turn zone (4).

5. The steering boot (1) according to claim 4,
**characterized in that** the turns of the transition zone (5) have an apical angle (α) and/or an angle (β) of the hollow junction (8) respectively smaller than those of the turns of the large turn zone (6).

6. The steering boot (1) according to one of claims 1 to 5,
**characterized in that** the transition zone (5) includes at most three turns.

7. The steering boot (1) according to one of claims 1 to 6,
**characterized in that** the turns (7) of the transition zone (5) have a thickness smaller than the thickness of the turns of the large turn zone (6).

8. The steering boot (1) according to one of claims 1 to 7,
**characterized in that** the turns (7) of the small turn zone (4) have a thickness smaller than the thickness of the turns of the large turn zone (6).

9. A rack steering gear for a motor vehicle of the type comprising a steering boot (1), a steering gearbox and a steering connecting rod, said boot (1) being arranged to connect the end of the steering gearbox to the steering connecting rod while surrounding an axial ball joint connecting the corresponding end of the rack to the steering connecting rod, **characterized in that** the steering boot (1) is according to one of claims 1 to 8 and **in that** the small and large bases (11,2) of the boot (1) are respectively arranged to be mounted one (11), around the connecting rod, the other (2), for maintenance on the steering gearbox, the small turn zone (4) adjoining the small base (11) of the boot and the large turn zone (6) adjoining the large base (2) of the boot.
